# EUROPEAN PATENT APPLICATION

(11) **EP 2 783 767 A1**
(43) Date of publication of application: **01.10.2014**
(21) Application number: 14162067.4
(22) Date of filing: 27.03.2014
(51) Int. Cl.: B21D 11/08, B21D 53/02, B21D 53/06, B21C 23/10, B21C 23/14, F24D 3/14, F24F 1/00, F28D 1/047, F28F 1/16

(54) **Ribbed tubular coil, for the passage of a transfer fluid for radiating panels for ceiling-, wall- or floor-mounted climate control systems, and method for its provision**

(30) Priority: 29.03.2013 IT PD20130077
(71) Applicant: Idrotermica Veneta Zeggio S.p.A., 32100 Belluno (IT)
(72) Inventor: Zeggio, Gianfranco, 32100 BELLUNO (IT)
(74) Representative: Modiano, Micaela Nadia

(57) **Abstract**

A ribbed tubular coil (12), for the passage of a transfer fluid for radiating panels for ceiling-, wall- or floor-mounted climate control systems, the coil being constituted by a single body (23) that is shaped so as to define a plurality of straight heat exchange portions (13, 14, 15, 16), between which intermediate curved portions (17, 18, 19) are defined.

## Description

The present invention relates to a ribbed tubular coil, for the passage of a transfer fluid for radiating panels for ceiling-, wall- or floor-mounted climate control systems, and a method for its provision.

Among climate control systems, nowadays ceiling-mounted radiating systems are increasingly widespread.

Such systems comprise a plurality of radiating panels, each one of which is provided, on the inside of the false ceiling, with heat exchange means that are adapted to convey a transfer fluid in order to transmit or absorb heat from the panel on which they are installed.

Modular radiating false ceiling systems are known today, widespread and particularly appreciated, of the type with metallic panels, or plasterboard panels, which are particularly indicated for heating and cooling offices, hospitals, airports, commercial environments, school buildings and in general buildings of the tertiary sector.

Generally such systems are made up of panels of galvanized sheet steel, or aluminum, or plasterboard, which are simple and rapid to install, and can be easily removed at any time in order to gain free access to the systems located in the plenum space and carry out maintenance operations.

The radiating panels can be continuous or microperforated, with metallic or plasterboard finishing.

The availability of microperforated panels is of particular utility if the intent is to improve the acoustics of the environment, thanks to its high sound-absorbing power.

An adapted thermal and sound insulation panel, for example made of polyester fiber, can be laid on the upper part of the radiating panels, when upward thermal insulation or an increase in acoustic performance is required.

The radiating panels are said to be active when they are provided with heat exchange means.

Such heat exchange means are constituted by a coil for the circulation of a transfer fluid, which is fixed to the panel by the interposition of thermal diffusers, i.e. plates for example made of anodized aluminum, glued to the metallic panels, or fixed on top of the plasterboard.

The coils can be made with a tube of plastic material, which is locked against the panel by the thermal diffusers, which are specially contoured with an omega-shaped cross-section, so as to surround the tube in order to optimize the heat exchange with it and at the same time stabilize their position.

Alternatively, the coils are made from portions of copper tubing, which are connected to each other with angular joints; one coil is then fixed to the panel by interposition of a thermal diffuser, also flat, with the center channel open for accommodating a straight portion of the copper tube coil.

Such radiating panels, although widespread and appreciated, are relatively complex to put together, it being necessary to assemble tubes and thermal diffusers, which require the use of labor and timescales that have a negative effect on production costs.

Furthermore, the use of several elements to assemble, i.e., tubes and diffusers, determines points of discontinuity between the several parts, and such points of discontinuity limit the efficiency of the heat exchange.

The aim of the present invention is to provide a ribbed tubular coil, for the passage of a transfer fluid for radiating panels for ceiling-, wall- or floor-mounted climate control systems, which is capable of overcoming the above mentioned drawbacks and limitations of the known art.

In particular, an object of the invention is to provide a radiating panel for ceiling-, wall- or floor-mounted climate control systems, which comprises such a ribbed tubular coil.

Within this aim, an object of the invention is to provide a method for providing such a ribbed tubular coil.

An object of the invention is thus to provide a radiating panel that is simpler to assemble with respect to conventional panels.

Another object of the invention is to provide a radiating panel with improved thermal efficiency with respect to conventional panels.

Another object of the invention is to provide a ribbed tubular coil for the passage of a transfer fluid for radiating panels according to the invention, which is simpler to mount.

Another object of the invention is to provide a ribbed tubular coil for the passage of a transfer fluid for radiating panels, a radiating panel for ceiling-, wall- or floor-mounted climate control systems, and a method for providing such coil, all of which can be provided using known systems and technologies.

This aim and these and other objects which will become better apparent hereinafter are achieved by a ribbed tubular coil, for the passage of a transfer fluid for radiating panels for ceiling-, wall- or floor-mounted climate control systems, characterized in that it is constituted by a single body that is shaped so as to define a plurality of straight heat exchange portions, between which intermediate curved portions are defined.

Advantageously, a method for providing a ribbed tubular coil for the passage of a transfer fluid for radiating panels consists in:
- extruding a straight bar made of metallic material that comprises a tubular part from which at least one flat portion for heat exchange protrudes laterally,
- removing said at least one flat portion from said tubular part in preset portions to be bent, thus defining a plurality of straight heat exchange portions,
- bending in a U-shape said portions to be bent, so as to arrange side by side two consecutive heat exchange portions.

Further characteristics and advantages of the invention will become better apparent from the detailed description that follows of a preferred, but not exclusive embodiment of a a ribbed tubular coil according to the invention and of a radiating panel provided with such a ribbed tubular coil, which are illustrated, by way of non-limiting example, in the accompanying drawings, in which:
Figure 1 is a perspective view of a radiating panel with coil according to the invention;
Figure 2 is a plan view of a straight bar extruded according to a step of the method according to the invention;
Figure 3 is a cross-sectional view taken along the line III-III in Figure 2;
Figure 4 is a plan view of the extruded straight bar with lateral heat exchange portions removed from the portions to be curved;
Figure 5 is a cross-sectional view taken along the line V-V in Figure 4;
Figure 6 is a view of a portion of ribbed coil according to the invention;

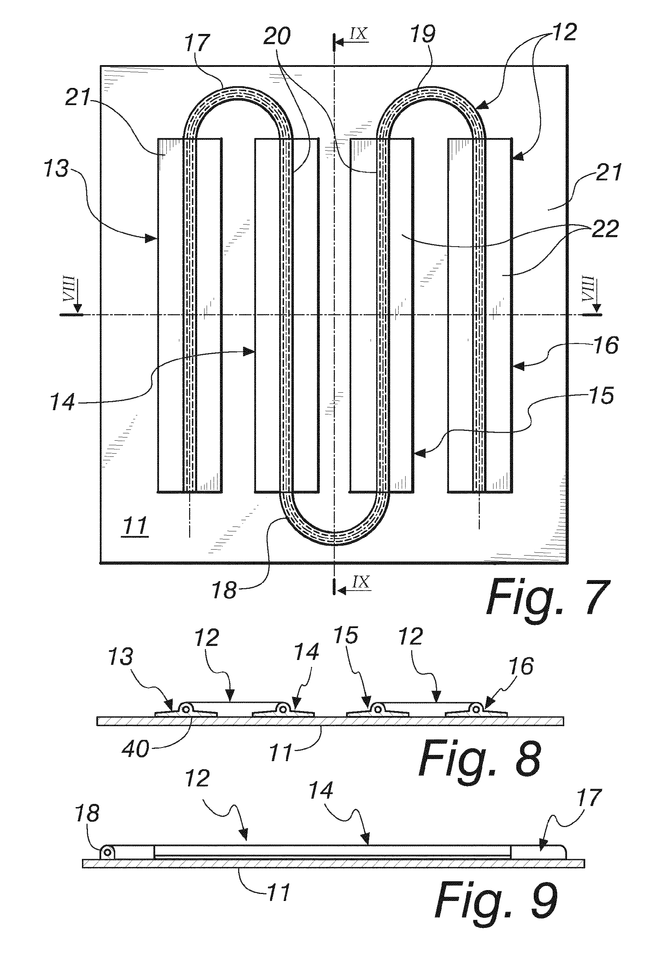

Figure 7 is a plan view of a panel with a coil according to the invention;
Figure 8 is a cross-sectional view taken along the line VIII-VIII in Figure 7;
Figure 9 is a cross-sectional view taken along the line IX-IX in Figure 7;
Figures 10 and 11 are corresponding cross-sectional views of a coil according to the invention in a variation of embodiment thereof;
Figure 12 is a plan view of a panel with a coil according to the invention, in a variation of embodiment.

With reference to the figures, a ribbed tubular coil, for the passage of a transfer fluid for radiating panels for ceiling-, wall- or floor-mounted climate control systems, according to the invention, is generally designated with the reference numeral 12, while a radiating panel for ceiling-, wall- or floor-mounted climate control systems, provided with a coil 12 according to the invention, is generally designated with the reference numeral 10.

Such radiating panel 10 comprises a flat body 11 on which is fixed a ribbed tubular coil 12, for the passage of a transfer fluid.

The ribbed tubular coil 12 is constituted by a single body, i.e. it is monolithic, in which each portion thereof is physically continuous with the contiguous portions; thus it is not several pieces put together, but rather it is a single piece.

Such coil 12 is characterized in that it is constituted by a single body 23 that is shaped so as to define a plurality of straight heat exchange portions 13, 14, 15, 16 between which intermediate curved portions 17, 18, 19 are defined.

In particular, in the example described herein, such ribbed tubular coil 12 has a plurality of straight heat exchange portions 13, 14, 15 and 16, with longitudinally extended flat lateral portions, which in this embodiment are mutually opposite with respect to the center and are designated with 21 and 22.

In alternative embodiments there can even be a single lateral portion 21 or 22.

Such flat lateral portions 21 and 22 have a cross-section that preferably decreases in height from the center of the cross-section outward, but they can also have a constant cross-section with varying thickness.

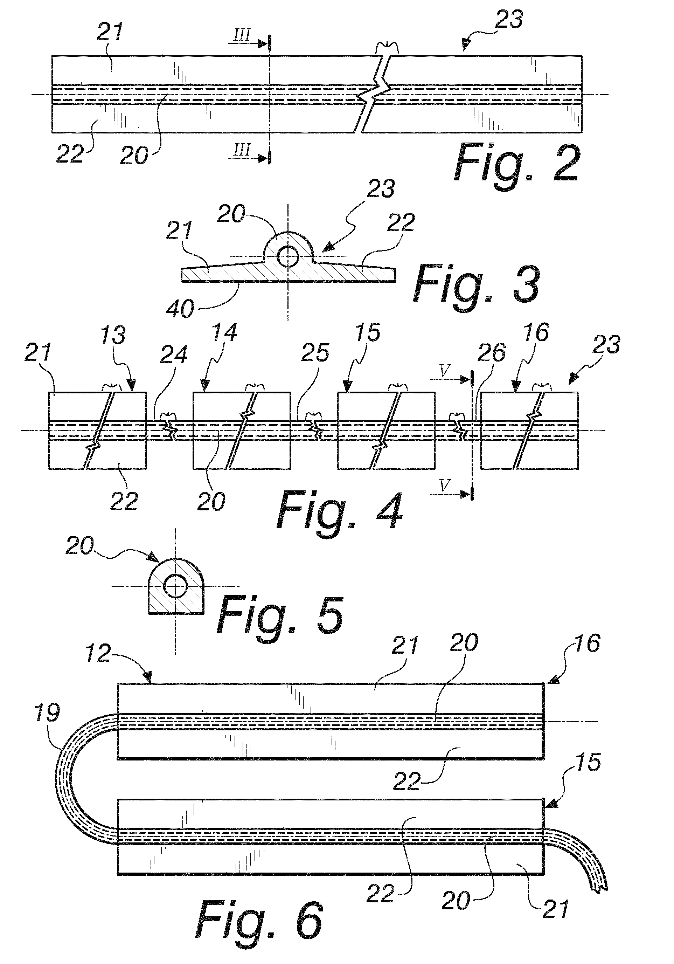

The flat lateral portions 21 and 22 define a resting surface 40, see Figure 2, that is adapted to define the complete and continuous contact surface with a flat body 11 of a radiating panel 10.

The intermediate curved portions 17, 18 and 19 do not have the flat lateral portions.

The ribbed tubular coil 12 is made of a metallic material, for example, but not exclusively, it is made of aluminum alloy.

It should be understood that the ribbing of the coil 12 is constituted by the flat lateral portions 21 and/or 22.

It should be understood that such ribbed tubular coil can also be provided in other, equivalent materials.

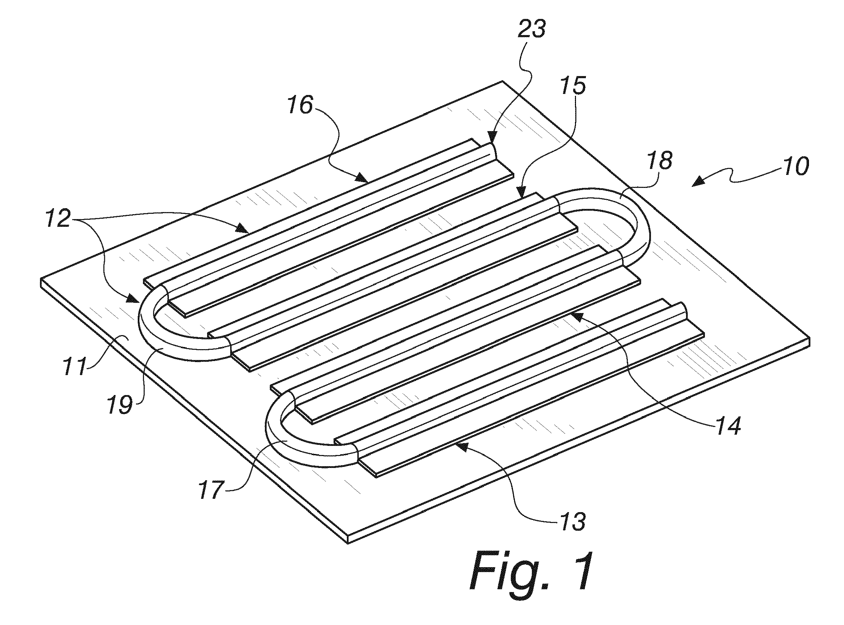

The straight heat exchange portions 13, 14, 15 and 16 have a tubular central part 20 from which the two opposing longitudinally extended plate-shaped portions, 21 and 22 respectively, extend laterally, as in Figures 1 to 5.

As mentioned previously, there can be just one flat portion 21 or 22.

Obviously, at the ends of the coil 12 there will be couplings for the entry and exit of the transfer liquid.

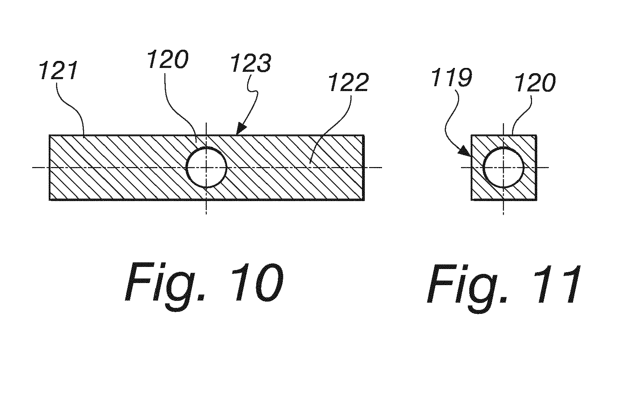

In a further of embodiment, shown for the purposes of example in Figures 10 and 11, the bar that defines the single body 123 is substantially parallelepiped, and has a central part 120 with the lateral portions 121 and 122 constituted by lateral heat exchange portions with cross-sections that are substantially equal in height to the tubular central part 120.

In this case also, a version with just one of the portions 121 or 122 is possible.

Figure 11 shows the cross-section of a corresponding intermediate curved portion 119.

Such flat lateral portions 121 and 122 are shaped for complete and continuous resting on the flat body of a radiating panel.

It should be understood that the flat lateral heat exchange portions can be provided in any shape and thickness, according to technical requirements, with a face for resting against a flat body of a radiating panel that is correspondingly flat, so as to define a resting surface 40 that is flat, as described above.

The invention also relates to a radiating panel 10 for ceiling-, wall- or floor-mounted climate control systems, characterized in that it comprises a flat body 11 on which a ribbed tubular coil 12 is fixed as described above, i.e. with a plurality of straight heat exchange portions 13, 14, 15, 16 between which intermediate curved portions 17, 18, 19 are defined, with the straight ribbed portions 13, 14, 15, 16 and the intermediate curved portions 17, 18, 19 being part of a single body 23.

The flat body 11 is made of a metallic material, for example of galvanized sheet steel, or of aluminum, or of plasterboard, in the manner of conventional panels.

The ribbed tubular coil 12 is fixed to the flat body 11 by way of gluing, or other conventional systems of fixing in the manner of thermal diffusers of conventional radiating panels.

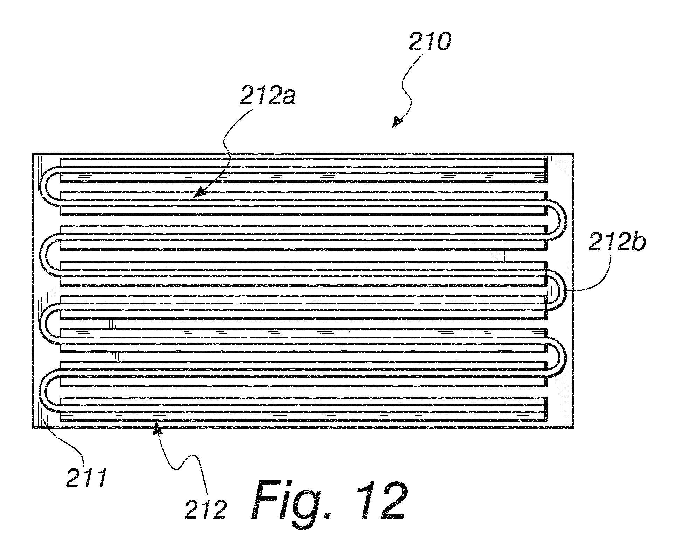

Figure 12 shows a further embodiment of a radiating panel with coil according to the invention, which is designated herein with the reference numeral 210.

Such radiating panel 210 comprises a flat body 211 on which are fixed more than one ribbed tubular coil 212, for example two ribbed tubular coils 212 and 212a, of the type described above; the two ribbed coils 212 and 212a are connected by way of a connector element 212b, in a central region of the flat body 211.

It should thus be understood that a radiating panel according to the invention can comprise two or more ribbed tubular coils as described above, according to the surface area of the panel and proportional to the maximum length of the extruded straight bar made of metallic material that can be provided and used.

The invention also relates to a method for providing a ribbed tubular coil 12, for the passage of a transfer fluid, for radiating panels, such as for example the radiating panel 10 according to the same invention.

Such method consists of:
- extruding a straight bar made of metallic material, designated with 23 in Figure 2 and with 123 in Figure 10, that comprises a tubular part 20 and 120 from which at least one flat portion 21 and/or 22, and 121 and/or 122 protrudes laterally; it should be understood that such at least one flat lateral portion can be of commensurate width and thickness to the technical requirements;
- removing the at least one flat lateral portion 21 and/or 22, and 121 and/or 122 from the central part 20 and 120 in preset portions to be bent 24, 25 and 26, as in Figure 4, thus defining a plurality of straight heat exchange portions 13, 14, 15, 16; such operation of removal of material can be carried out with conventional mechanical machining equipment; the cross-section V-V in Figure 5 shows how the lateral flat portions 21 and 22 are removed completely in the portions to be bent 24, 25 and 26;
   bending in a U-shape the portions to be bent 24, 25 and 26, so as to arrange side by side two consecutive straight heat exchange portions 13, 14, 15 and 16; the portions to be bent 24, 25 and 26, once bent in a U-shape, determine the intermediate curved portions 17, 18 and 19.

The U-shaped bend of the portions to be bent 24, 25 and 26 is provided, usually, by cold formation.

With such a method a ribbed tubular coil 12 is provided, for the passage of a transfer fluid for radiating panels, according to the invention as described above.

In practice it has been found that the invention fully achieves the intended aim and objects.

In fact, with the invention a ribbed tubular coil, and a radiating panel provided therewith, have been devised which have improved thermal efficiency with respect to conventional coils and panels, thanks to the structure of the coil 12 in which the tubular part for the passage of the transfer fluid, i.e. the central part 20 in the invention, and the thermal diffusers, i.e. the flat longitudinal lateral portions 20 and 21, are integrated to belong to a single body, i.e. a single piece of extruded metallic material, conveniently machined and contoured.

In this manner, with respect to conventional panels, there is no point of discontinuity between the tubular part and the diffusers, and the heat transmission is improved.

Moreover, with the invention a radiating panel has been devised that is simpler and more rapid, and thus more economic, to assemble, there being a single element, the coil 12, to be fixed to the flat body of the panel, instead of two or more as in conventional radiating panels.

In addition, with the invention a ribbed tubular coil for the passage of a transfer fluid for radiating panels, a radiating panel for ceiling-, wall- or floor-mounted climate control systems, and a method for providing said coil are all provided, all of which can be provided using known systems and technologies.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. PD2013A000077 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A ribbed tubular coil (12), for the passage of a transfer fluid for radiating panels for ceiling-, wall- or floor-mounted climate control systems, **characterized in that** it is constituted by a single body (23) that is shaped so as to define a plurality of straight heat exchange portions (13, 14, 15, 16), between which intermediate curved portions (17, 18, 19) are defined.

2. The tubular coil according to claim 1, **characterized in that** it is made of metallic material.

3. The tubular coil according to the preceding claims, **characterized in that** it is made of aluminum alloy.

4. The tubular coil according to the preceding claims, **characterized in that** said straight heat exchange portions (13, 14, 15, 16) have a tubular part (20) from which at least one longitudinally extended flat portion (21, 22) protrudes laterally and is contoured for resting on a flat body (11).

5. The tubular coil according to one or more of the preceding claims, **characterized in that** said at least one flat lateral portion (21, 22) has a cross-section that decreases in height from the center of the cross-section outward.

6. The tubular coil according to claims 1 to 4, **characterized in that** said at least one flat lateral portion (21, 22) has a constant cross-section from the center of the cross-section outward.

7. The tubular coil according to one or more of the preceding claims, **characterized in that** said at least one flat lateral portion (21, 22) defines a resting surface (40) that is adapted to define the continuous contact surface with the flat body (11) of a radiating panel (10).

8. The tubular coil according to one or more of the preceding claims, **characterized in that** the single body (123) is provided by a bar that is substantially shaped like a parallelepiped and has a central part (120) with at least one lateral heat exchange portion (121, 122) the cross-section of which is substantially equal in height to the tubular central part (120).

9. A radiating panel (10) for ceiling-, wall- or floor-mounted climate control systems, **characterized in that** it comprises a flat body (11) on which a ribbed tubular coil (12) is fixed, for the flow of a transfer fluid, and is provided with a plurality of straight heat exchange portions (13, 14, 15, 16) between which intermediate curved portions (17, 18, 19) are defined, said straight heat exchange portions (13, 14, 15, 16) and said intermediate curved portions (17, 18, 19) being in one piece.

10. The radiating panel (210) according to claim 9, **characterized in that** it comprises a flat body (211) on which are fixed at least two ribbed tubular coils (212, 212a), which are connected by way of a connector element (212b).

11. A method for providing a ribbed tubular coil (12) for the passage of a transfer fluid for radiating panels, which comprises the steps of:
- extruding a straight bar made of metallic material (23) that comprises a tubular part (20) from which at least one or more flat portion (21, 22) for heat exchange protrudes laterally,
- removing said lateral flat portions (21, 22) from said tubular part (20) in preset portions to be bent (24, 25, 26), thus defining a plurality of straight heat exchange portions (13, 14, 15, 16),
- bending in a U-shape said portions to be bent (24, 25, 26), so as to arrange side by side two consecutive straight heat exchange portions.

12. The method according to the preceding claim, **characterized in that** said U-shaped bend is usually provided by cold formation.
